# EUROPÄISCHE PATENTSCHRIFT

(11) **EP 1 356 964 B1**
(45) Veröffentlichungstag und Bekanntmachung des Hinweises auf die Patenterteilung: **02.11.2006**
(21) Anmeldenummer: 03007848.9
(22) Anmeldetag: 05.04.2003
(51) Int. Cl.: B60H 1/00

(54) **Belüftungs-, insbesondere Klimaeinrichtung eines Fahrzeuges**
ventilation system, in particular an air conditioning system of a vehicle
Système de ventilation, en particulier de conditionnement d'air d'un véhicule

(30) Priorität: 27.04.2002 DE 10218992
(43) Veröffentlichungstag der Anmeldung: 29.10.2003
(73) Patentinhaber: Behr GmbH & Co. KG, 70469 Stuttgart (DE)
(72) Erfinder: Dieksander, Wolfgang, 70794 Filderstadt (DE); Giez, Stefan, 71120 Grafenau (DE); Hörig, Harald, 76476 Bischweier (DE); Schweizer, Gebhard, 71229 Leonberg (DE)
(74) Vertreter: Patentanwalts-Partnerschaft Rotermund + Pfusch + Bernhard

(56) Entgegenhaltungen:
- EP-A- 0 325 481
- EP-A- 0 326 301
- WO-A-01/38115
- DE-A- 19 957 618
- US-A- 4 779 672
- US-A- 6 142 864
- US-B1- 6 386 966

## Beschreibung

Die Erfindung betrifft eine Belüftungs-, insbesondere Klimaeinrichtung eines Fahrzeuges, mit den Merkmalen des Oberbegriffs von Anspruch 1.

Eine zur Durchführung des erfindungsgemäßen Verfahrens grundsätzlich geeignete Einrichtung ist aus DE 42 43 165 A1 bekannt. Bei dieser bekannten Einrichtung sind für einen Umluftbetrieb zwei getrennt liegende und auch getrennt steuerbare Ansaugöffnungen vorhanden. Die eine dieser Ansaugöffnungen ist eine Defrosterdüse im Windschutzscheibenbereich, die wahlweise als Defrosterdüse oder als Ansaugluftöffnung für einen Umluftbetrieb der Einrichtung schaltbar ist. Durch diese Doppelfunktion der vorgenannten Defrosterdüse soll eine kostengünstige Anordnung geschaffen werden, durch die der Warmluftstau zwischen Frontscheibe und Armaturenbrett beseitigt werden kann, ohne dass dies zu Einbußen hinsichtlich der Behaglichkeit führt. Damit dient bei jener bekannten Einrichtung eine der beiden Ansaugöffnungen, nämlich diejenige die durch die Defrosterdüse gebildet werden kann, allein dazu, Umluft gegebenenfalls direkt aus dem Wageninneren aus dem Windschutzscheibenbereich abziehen zu können. Darüber, wie ein Volumenstromverhältnis zwischen den beiden bei jener bekannten Einrichtung für einen Umluftbetrieb aktiv schaltbaren Ansaugöffnungen eingestellt werden kann oder soll, enthält jenes Dokument keine Angabe.

Grundsätzlich gleiches gilt für eine aus DE 37 17 771 A1 bekannte Belüftungseinrichtung, bei der eine der beiden Ansaugöffnungen im Umluftbetrieb ebenfalls eine für diesen Umluftbetrieb entsprechend schaltbare Defrosterdüse ist.

Gegenstand US-A-4, 779, 672 ist ein Ventilatorraum mit einem Ventilator vorgesehen, der innerhalb eines Gehäuses liegt, in dem bei einem Betriebszustand der Klimaanlage, in dem Frisch- und Umluft vermischt gefördert werden, diese Mischung erfolgt. Das Gehäuse dieses Ventilatorraumes ist direkt nach außen hin mit klappengesteuerten Öffnungen versehen und zwar mit einer Öffnung für die Frischluftzufuhr und zwei Öffnungen zur Umluftzufuhr. Sämtliche Öffnungen liegen voneinander entfernt und führen von außen direkt in den Mischraum. Die beiden Umluftöffnungen sind derart gesteuert, dass bei einem niedrigen Luftdurchsatz lediglich eine erste Öffnung geöffnet ist, während bei höheren Luftdurchsätzen zusätzlich noch eine Öffnung geöffnet ist.

Gegenstand (DE 199 57 618 A1) ist eine Klimaanlage, bei der aus Gründen einer möglichst guten Geräuschdämpfung gegenüber dem Fahrzeuginnenraum eine einzige Umluft-Ansaugöffnung an einem gegenüber dem Fahrzeuginnenraum verdeckt liegenden Ort angeordnet ist und zudem noch mit einem geräuschdämpfend wirkenden Ansaugkanal ausgerüstet ist.

Die Erfindung beschäftigt sich mit dem Problem, eine Belüftungseinrichtung eines Kraftfahrzeuges im Umluftbetrieb derart zu betreiben, dass ein möglichst geräuscharmer Umluftbetrieb für den größten Teil der in der Praxis auftretenden Betriebszustände gegeben ist. Dabei sollen andererseits dennoch auch Betriebszustände möglich sein, in dem extrem hohe Luftumwälzvolumenströme bewältigt werden können. Um diese beiden Forderungen erfüllen zu können, musste bisher ein die Geräuschdämmung im Normalbetrieb qualitätsmindernder Kompromiss eingegangen werden. Einen solchen Kompromiss zu vermeiden, ist das vorrangige Ziel der vorliegenden Erfindung.

Gelöst wird das der Erfindung zugrunde liegende Problem durch eine gattungsgemäße Belüftung mit sämtlichen Merkmalen des Patentanspruchs 1.

Die Erfindung beruht dabei auf dem allgemeinen Gedanken, eine Belüftungseinrichtung im Umluftbetrieb bei normalen Betriebsverhältnissen mit insbesondere lediglich einer Ansaugöffnung betreiben zu können, die für sich in ihrem Umfeld besonders geräuschdämpfend ausgelegt ist. Um eine solche Geräuschdämpfung erhalten zu können, kann diese eine Ansaugöffnung lediglich für einen maximal begrenzten Volumenstrom ausgelegt werden. Dabei kann die Grenze derart gelegt werden, dass zumindest alle in der Praxis auftretenden Normalfälle abgedeckt sind. Lediglich für hiervon abweichende Extremfälle wird zur Ermöglichung eines sehr hohen Umluftvolumenstromes, der nicht mehr allein von der ersten Ansaugöffnung aufgenommen werden kann, eine zweite Ansaugöffnung zugeschaltet, bei der eine gegenüber der ersten Ansaugöffnung niedrigere Geräuschdämpfung für die betreffenden Extremfälle in Kauf genommen wird. In dieser Art der Verfahrensführung besteht die vorliegende Erfindung, die sich einer Belüftungseinrichtung mit zwei getrennten Ansaugöffnungen lediglich als einer Art eines zur Durchführung des Verfahrens geeigneten Werkzeuges bedient.

Zweckmäßige Ausgestaltungen von Einrichtungen zur Durchführung des erfindungsgemäßen Verfahrens sind Gegenstand der Unteransprüche.

In vorteilhafter Ausgestaltung ist die erste Umluft-Ansaugöffnung, deren Strömungsquerschnitt grundsätzlich steuerbar sein kann, zur Minimierung der Ansauggeräusche insbesondere verdeckt angeordnet. Dem Vorteil einer hierdurch erreichten Geräuschminderung steht ein erhöhter Strömungswiderstand entgegen. Zur Vermeidung eines bei hohen Umluftströmen unerwünscht hohen Strömungswiderstandes dient eine widerstandsarme Ausbildung des durch die zweite Öffnung führenden Strömungsweges, bei der diesem Vorteil der Nachteil einer größeren Geräuschentwicklung korreliert.

Bei einem Umluft-Belüftungsfall, bei dem beispielsweise zur schnellen Abkühlung des Fahrzeuginnenraumes ein möglichst hoher Luftmengenstrom erforderlich ist, wird die durch die in dem strömungsgünstig angeordneten Strömungsweg liegende zweite Umluft-Ansaugöffnung bedingte Geräuschentwicklung bei diesem Betriebszustand in Kauf genommen.

Erste und zweite Umluft-Ansaugöffnung im Sinne der Erfindung können jeweils eine erste und eine zweite Öffnung oder auch jeweils mehrere solcher Öffnungen sein.

Das bedarfsgerechte Öffnen der zweiten Umluftansaugöffnung kann bei offener erster Umluftansaugöffnung (zusätzliches Öffnen) oder in einem speziellen Fall mit Schließen der ersten Umluftansaugöffnung (Umschalten auf zweite Öffnung) erfolgen.

Das erfindungsgemäß luftbedarfsabhängige Schalten der zweiten Umluftansaugöffnung kann auch abhängig von Parametern wie beispielsweise Solareinstrahlung oder Kühl- (nicht direkt Luft-) Bedarf erfolgen.

Eine vorteilhafte Ausgestaltung einer Einrichtung für ein erfindungsgemäßes Verfahren ist in der Zeichnung dargestellt.

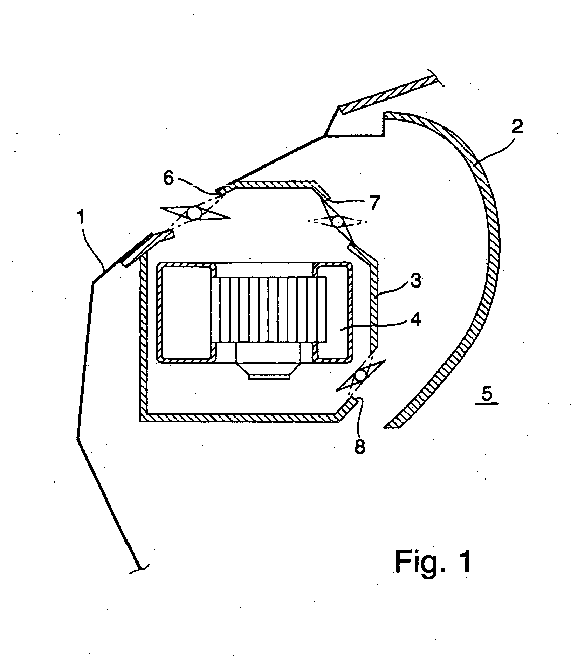

In dieser zeigt eine einzige
- Fig. 1: eine in einem Schnitt schematisch dargestellte Belüftungseinrichtung.

Innerhalb einer Außenhaut 1 eines Fahrzeuges ist beispielsweise zwischen einer Instrumententafel 2 dieses Fahrzeuges und der Außenhaut 1 ein Gehäuse 3 mit einem darin vorgesehenen Gebläse 4 für eine Belüftungs- bzw. Klimaeinrichtung des Fahrzeuges angeordnet. Das Gebläse 4 fördert Luft in den mit 5 angedeuteten Innenraum des Fahrzeuges, wobei die Zuleitungen zu dem Fahrzeuginneren in der Zeichnung nicht dargestellt sind.

Die von dem Gebläse 4 geförderte Luft kann aus der Atmosphäre stammen und durch eine verschließbare Ansaugöffnung 6 in das Gehäuse 3 eingesaugt werden. Ausschließlich oder zusammen mit Atmosphärenluft kann das Gebläse 4 aus dem Fahrzeuginnenraum stammende Umluft fördern. Für das Ansaugen der Umluft sind in dem Gehäuse 3 eine erste Umluft-Ansaugöffnung 7 und eine zweite Umluft-Ansaugöffnung 8 vorgesehen, die jeweils gesteuert bzw. geregelt verschließbar sind. Von den Ansaugöffnungen 6, 7 und 8 sind jeweils eine gezeichnet, wobei jedoch von jeder Art auch mehrere dieser Öffnungen vorgesehen sein können.

Die erste Umluft-Ansaugöffnung 7 liegt in einem zu dem Fahrzeuginnenraum 5 hinter der Instrumententafel 2 verdeckten Bereich mit einem relativ großen Strömungswegvolumen und einem großen Strömungsweg zwischen dieser Öffnung 7 und dem Übergang von dem durch die Instrumententafel 2 verdeckten Raum in den Fahrzeuginnenraum 5.

Die zweite Umluft-Ansaugöffnung liegt dagegen relativ nahe an dem Übergangsbereich zwischen Gehäuse 3 und Instrumententafel 2 zu dem Fahrzeuginnenraum hin.

Durch die Anordnung der ersten Umluft-Ansaugöffnung 7 hinter der Instrumententafel 2 in einem gegenüber dem Fahrzeuginnenraum 5 stark verdeckten Bereich werden die von dieser Ansaugöffnung 7 ausgehenden Ansauggeräusche in einem äußerst hohen Maße zum Fahrzeuginnenraum hin gedämpft. Durch die zum Fahrzeuginnenraum 5 hin näher gelegene Position der zweiten Umluft-Ansaugöffnung 8 sind dort entstehende Ansauggeräusche gegenüber dem Fahrzeuginnenraum 5 im Vergleich zu denen bei der ersten Umluft-Ansaugöffnung 7 geringer gedämpft.

Die Belüftungseinrichtung wird erfindungsgemäß besonders vorteilhaft derart betrieben, dass bei einem Umluftbedarf in einem unteren Bereich zunächst allein die erste Umluft-Ansaugöffnung 7 geöffnet und erst bei einem höheren Luftbedarf eine zusätzliche Durchströmung durch die zweite Umluft-Ansaugöffnung 8 zugeschaltet wird.

Zur Erhöhung der Dämpfung der Ansauggeräusche bei der durch die erste Umluft-Ansaugöffnung 7 angesaugten Luft kann diese angesaugte Umluft durch beispielsweise ein Partikelfilter hindurchgeführt werden. Um durch die zweite Umluft-Ansaugöffnung 8 möglichst widerstandsfrei große Umluftmengen in das Gebläse 4 führen zu können, kann der Strömungsweg von der Öffnung 8 zu dem Eintritt in das Gebläse 4 frei von Strömungswiderständen verursachenden Einbauten gehalten werden. Damit kann dieser Umluftstrom insbesondere als Bypass zu einem in der Einrichtung vorgesehenen Filter, durch das beispielsweise die Umluft von der ersten Ansaugöffnung 7 geführt werden kann, ausgebildet sein.

Eine weitere vorteilhafte Einrichtung, die ausschließlich mit Umluft betrieben wird, kann zur Umsetzung des erfindungsgemäßen Verfahrens im besonderen für eine Fondklimatisierung im Fahrzeuginneren eingesetzt werden. Bei einer solchen Einrichtung ist eine Ansaugöffnung 6 für Atmosphärenluft nicht vorhanden und eine erste Umluftansaugöffnung 7 nicht schaltbar, sondern bei einer ausschließlich schaltbaren zweiten Umluftansaugöffnung 8 dauerhaft offen.

## Patentansprüche

1. Belüftungs-, insbesondere Klima-Einrichtung eines Fahrzeuges mit
- einem Gebläse (4) und einem Gehäuse (3) und
- zwei Öffnungen in dem Gehäuse (3), nämlich einer ersten und einer zweiten Umluft-Ansaugöffnung (7; 8) zum Ansaugen von Umluft aus dem Fahrzeuginneren (5), von denen zumindest der Öffnungsquerschnitt der zweiten Umluft-Ansaugöffnung (8) veränderbar ausgestaltet ist,
- bei der bei einem Umluftbedarf in einem unteren Bereich zunächst allein die erste Umluft-Ansaugöffnung (7) und erst bei einem höheren Luftbedarf eine zusätzliche Durchströmung durch die zweite Umluft-Ansaugöffnung (8) zugeschaltet ist, und wobei
- die erste Umluft-Ansaugöffnung (7) in einem zu dem Fahrzeuginneren hinter einer Instrumententafel (2) des Fahrzeuges verdeckten Bereich mit einem relativ großen Strömungsvolumen und einem großen Strömungsweg zwischen dieser ersten Umluft-Ansaugöffnung (7) und dem Übergang von dem durch die Instrumententafel (2) gegenüber dem Fahrzeuginnenraum (5) verdeckten Raum liegt,
**gekennzeichnet durch** die Merkmale, dass
- die zweite Umluft-Ansaugöffnung (8) in dem **durch** die Instrumententafel (2) gegenüber dem Fahrzeuginnenraum (5) verdeckten, die erste Umluft-Ansaugöffnung (7) enthaltenden Bereich stromauf der ersten Umluft-Ansaugöffnung (7) relativ nahe an dem Übergangsbereich des verdeckten, zwischen dem Gehäuse (3) und der Instrumententafel (2) liegenden Bereiches zu dem Fahrzeuginnenraum (5) hin liegt und, die Gestalt der ersten Umluft-Ansaugöffung (7) und/oder des stromauf dieser ersten Umluft-Ansaugöffung (7) liegenden Strömungsweges gegenüber der zweiten Umluft-Ansaugöffnung (8) gerauschdämpfender ausgelegt ist.

2. Belüftungs-Einrichtung nach Anspruch 1,
**dadurch gekennzeichnet,**
**dass** ausschließlich im Strömungsweg der ersten AnsaugluftÖffnung (7) ein von der Umluft zu passierendes Filter angeordnet ist.

## Claims

1. A ventilation system, in particular an air-conditioning system for a motor vehicle, comprising
- a fan (4) and a housing (3) and
- two openings in the housing (3), namely a first and a second circulating air intake opening (7; 8) for intake of circulating air from the vehicle interior (5), at least the cross section of the opening of the second circulating air intake opening (8) being designed to be variable,
- such that in the case when circulating air is needed in a lower area, first the first circulating air intake opening (7) is activated alone and only when the air demand is higher is additional flow added through the second circulating air intake opening (8), and whereby
- the first circulating air intake opening (7) is located in an area that is concealed behind a dashboard (2) of the vehicle with respect to the vehicle interior, said area having a relatively large flow volume and a large flow path between this first circulating air intake opening (7) and the transition from the space concealed by the dashboard (2) with respect to the vehicle interior (5),
**characterized by** the features, wherein
- the second circulating air intake opening (8) is in the area containing the first circulating air intake opening (7) and concealed by the dashboard (2) with respect to the vehicle interior (5), said area being situated upstream from the first circulating air intake opening (7) and relatively close to the transition area from the concealed area situated between the housing (3) and the dashboard (2) to the vehicle interior (5), and the shape of the first circulating air intake opening (7) and/or the flow path situated upstream from this first circulating air intake opening (7) is designed to have a greater noise abatement effect in comparison with the second circulating air intake opening (8).

2. The ventilation system according to Claim 1,
**characterized in that**
a filter through which the circulating air is to pass is arranged exclusively in the flow path of the first intake air opening (7).

## Revendications

1. Système de ventilation, en particulier de climatisation d'un véhicule, comprenant
- un ventilateur (4) et un boîtier (3) et
- deux orifices dans le boîtier (3), à savoir un premier et un second orifice d'aspiration d'air circulé (7 ; 8) pour aspirer de l'air circulé à partir de l'habitacle (5) du véhicule, dont au moins la section transversale d'ouverture du second orifice d'aspiration d'air circulé (8) présente une configuration modifiable,
- dans lequel, pour un besoin d'air circulé dans une zone inférieure, seul le premier orifice d'aspiration d'air circulé (7) est d'abord ouvert et un écoulement supplémentaire au travers du second orifice d'aspiration d'air circulé (8) n'est commuté que pour un besoin d'air supérieur, et dans lequel
- le premier orifice d'aspiration d'air circulé (7) se situe dans une zone dissimulée par rapport à l'habitacle du véhicule derrière un tableau de bord (2) du véhicule avec un volume d'écoulement relativement grand et un grand parcours d'écoulement entre ce premier orifice d'aspiration d'air circulé (7) et le passage de l'espace dissimulé par rapport à l'habitacle (5) du véhicule par le tableau de bord (2),
**caractérisé par** les caractéristiques que
- le second orifice d'aspiration d'air circulé (8) se situe dans la zone dissimulée par rapport à l'habitacle (5) du véhicule par le tableau de bord (2) contenant le premier orifice d'aspiration d'air circulé (7), en amont du premier orifice d'aspiration d'air circulé (7), relativement près de la zone de passage de la zone dissimulée, située entre le boîtier (3) et le tableau de bord (2), en direction de l'habitacle (5) du véhicule, et la configuration du premier orifice d'aspiration d'air circulé (7) et/ou du parcours d'écoulement situé en amont de ce premier orifice d'aspiration (7) présente une conception insonorisante par rapport au second orifice d'aspiration d'air circulé (8).

2. Système de ventilation suivant la revendication 1, **caractérisé en ce qu'**un filtre à traverser par l'air circulé est disposé exclusivement dans le parcours d'écoulement du premier orifice d'aspiration d'air circulé (7).
